Europäisches Patentamt

European Patent Office

Office européen des brevets

(11) Publication number: **0 457 394 A1**

# EUROPEAN PATENT APPLICATION

(21) Application number: 91201100.4

(51) Int. Cl.5: **G11B 5/31**

(22) Date of filing: 08.05.91

(30) Priority: 17.05.90 NL 9001146

(43) Date of publication of application:
21.11.91 Bulletin 91/47

(84) Designated Contracting States:
DE FR GB IT

(71) Applicant: N.V. Philips' Gloeilampenfabrieken
Groenewoudseweg 1
NL-5621 BA Eindhoven(NL)

(72) Inventor: Draaisma, Eeltje Aize, c/o INT.
OCTROOIBUREAU B.V.
Prof. Holstlaan 6
NL-5656 AA Eindhoven(NL)
Inventor: Van Heeren, Arie Hendrik, INT.
OCTROOIBUREAU B.V.
Prof. Holstlaan 6
NL-5656 AA Eindhoven(NL)
Inventor: Pronk, Franciscus A., c/o INT.
OCTROOIBUREAU B.V.
Prof. Holstlaan 6
NL-5656 AA Eindhoven(NL)

(74) Representative: Van Weele, Paul Johannes
Frits et al
INTERNATIONAAL OCTROOIBUREAU B.V.
Prof. Holstlaan 6
NL-5656 AA Eindhoven(NL)

(54) Thin film magnetic head.

(57) A thin-film magnetic head has a connecting tab (22), provided on a substrate (23) for the connection of an external connecting track (16). In the region of a central portion (21) of the connecting tab an auxiliary layer (26) is provided between the connecting tab (22) and the substrate (23), as a result of which the central portion (21) of the connecting tab is located at a larger distance from the substrate than coating portions (24) of a shielding layer (25). This provides a proper contact between the external connecting track (16) and the connecting tab (22), even if the external connecting track (16) is in not such a good position with respect to the connecting tab (22).

FIG. 7

The invention relates to a thin-film magnetic head, having a substrate on which at least a magnetic head structure consisting of several layers is present, the structure including at least one connecting tab for connecting a connecting track, the edges of the connecting tab being coated by covering portions of a shielding layer.

Such a structure of a thin-film magnetic head provided with a connecting tab is generally used for connecting the magnetic head to signal processing means. Therein the connecting track, in particular an external connecting track, is often located on a flexible foil, which then must be aligned with respect to the magnetic head during assembly, to such an extent that the external connecting track is located between the covering portions of the shielding layer facing the central uncovered portion of the connecting tab. During manufacture of the prior art magnetic head, after the shielding layer has been removed by etching, portions of the shielding layer are left behind above the connecting tab on the connecting tab edges due to alignment tolerances of the etch masks with respect to the connecting tab. Because of the presence of the covering portions, formed higher requirements must be satisfied as regards the positioning accuracy during connection of the external connecting track. The occurrence of these covering portions cannot be avoided with simple means. If the external connecting track is not positioned correctly between the covering portions of the shielding layer, but is located partly on the shielding layer, then the contact with the connecting tab is greatly reduced, which might cause problems as regards the electric connection. To avoid this problem, high requirements are imposed on the positioning of the external connecting track with respect to the connecting tab.

The object of the invention is inter alia to provide a structure of a thin-film magnetic head, in which a good contact between the connecting tab and the connecting track is guaranteed whilst lower requirements as regards the positioning accuracy are to be satisfied.

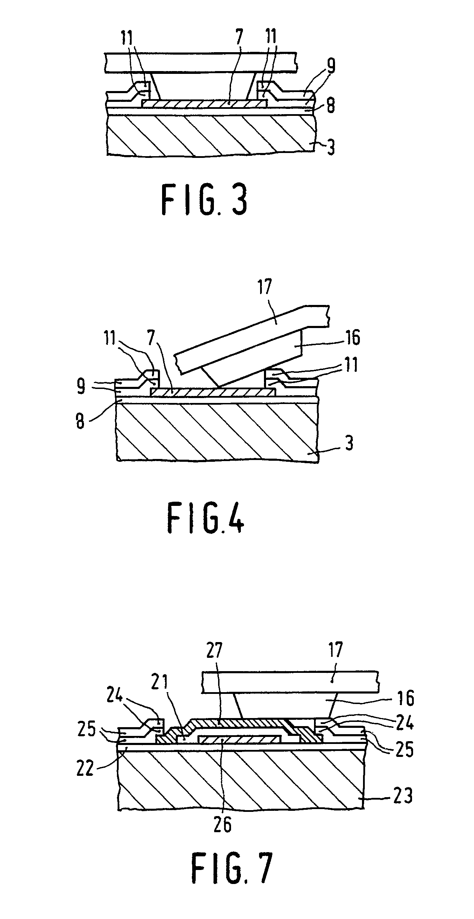

To this end, the thin-film magnetic head according to the invention, is characterized, in that a central portion of the connecting tab, located between the edges of the connecting tab, is located at at least the same distance from the substrate as the covering portions of the shielding layer. If the connecting track is now shifted with respect to the connecting tab, the size of the contact plane is indeed reduced, but a contact plane is preserved (Fig. 7). This is in contrast with the prior art thin-film magnetic head, described in the foregoing, in which the contact is reduced to a line contact, when the positioning has been carried out inaccurately (see Figure 4).

An advantageous structure of the thin-film magnetic head, which achieves that the central uncovered portion of the connecting tab, taken in a direction from the substrate, is placed at a level higher than or equal to the shielding layer, is characterized in that at least an auxiliary layer is provided between the substrate and the connecting tab, in the region of the central portion of the connecting tab.

In this embodiment a further advantageous structure of the thin-film magnetic head, is characterized, in that the auxiliary layer is part of at least one of the layers of the magnetic head structure. Consequently no additional manufacturing steps are required to obtain the connecting tab located at the higher level. Only the etch masks must be adapted to such an extent that a portion of a previously deposited layer of the magnetic head structure remains present in the region of the connecting tab.

The invention will now be explained in greater detail with reference to an embodiment of the thin-film magnetic head according to the invention, shown in the accompanying Figures. Herein:

Figure 1 shows a prior art thin-film magnetic head provided with a plurality of magnetic head structures,

Figure 2 is a cross-sectional view of the prior art thin-film magnetic head of Figure 1,

Figure 3 shows a correct connection between a connecting tab of the prior art magnetic head and an external connecting track,

Figure 4 shows a poor connection,

Figure 5 shows an embodiment of the thin-film magnetic head according to the invention,

Figure 6 is a cross-sectional view of the thin-film magnetic head according to the invention, shown in Figure 5, and

Figure 7 shows a connection between a connecting tab of the magnetic head according to the invention and an external connecting track.

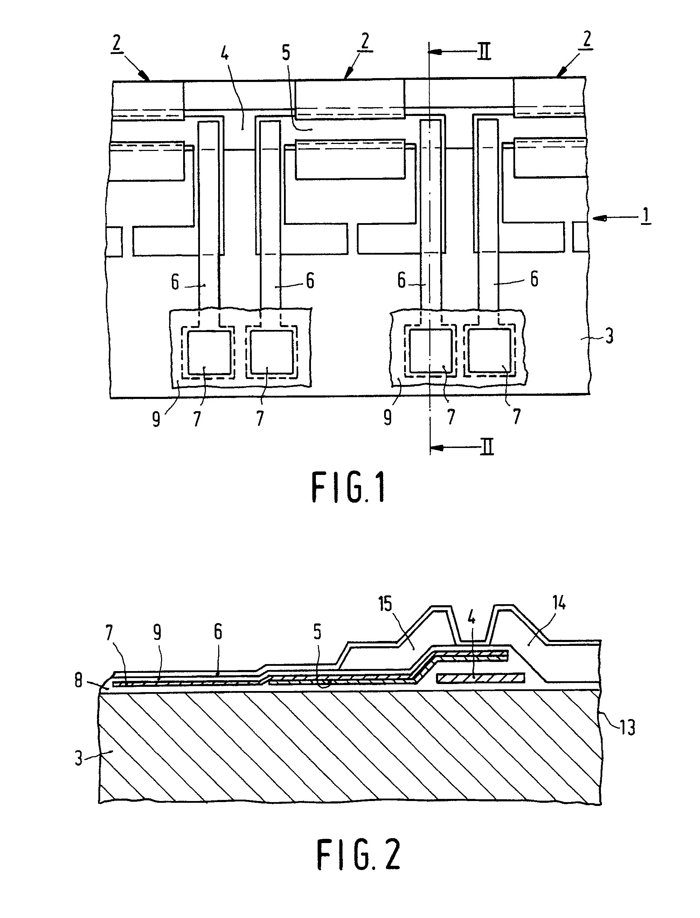

Figure 1 shows a prior art thin-film magnetic head 1 provided with a plurality of magnetic head structures 2. The magnetic head is assembled from several layers present on a substrate 3, comprising a first layer having an electrical conductor 4, a second layer having a magneto-resistance element 5 and a third layer having connecting strips 6 and connecting tabs 7. Insulating layers 8 (see Figure 2) are located between the substrate and the first and second layers and a shielding layer 9 is located on the third layer. In the region of the connecting tabs 7 the shielding layer 9 has been etched away to allow the connection of external signal processing means. After etching, covering portions 11 of the shielding layer 9 are left behind on the edges 10 of the connecting tab as a result of alignment tolerances of the etch mask and a central portion 12 of the connecting tap 7 is not coated.

Figure 2 is a cross-sectional view of the thin-film magnetic head shown in Figure 1. The substrate 3 acts as a flux conductor. Furthermore, a leading flux conductor 14 is present contiguous to a head face 13 and a rear flux conductor 15 is located at some distance from the front flux conductor. The distance between the leading and rear flux conductors is magnetically bridged by the magneto-resistance element 5, which is, for example, in the shape of a ring in order to achieve a proper operation (see Figure 1) and is interrupted at that side of the rear flux conductor that is remote from the head face. The magneto-resistance element 5 is connected to the connecting tabs 7 via the connecting strips 6.

The connection to external means is effected by connecting tracks to the connecting tabs. Figure 3 shows a correct connection between a connecting track 16, more specifically an external connecting track, present on a flexible foil 17, and a connecting tab 7. For this correct connection, the external connecting track 16 must be positioned accurately with respect to the connecting tab 7, in such a manner that the external connecting track 16 is located between the coating portions 11 of the shielding layer 9 on the connecting tab 7. Figure 4 shows a connection in which the foil 17 has not been positioned accurately relative to the connecting tab 7, which reduces the contact between the external connecting track 16 and the connecting tab 7 to a contact line.

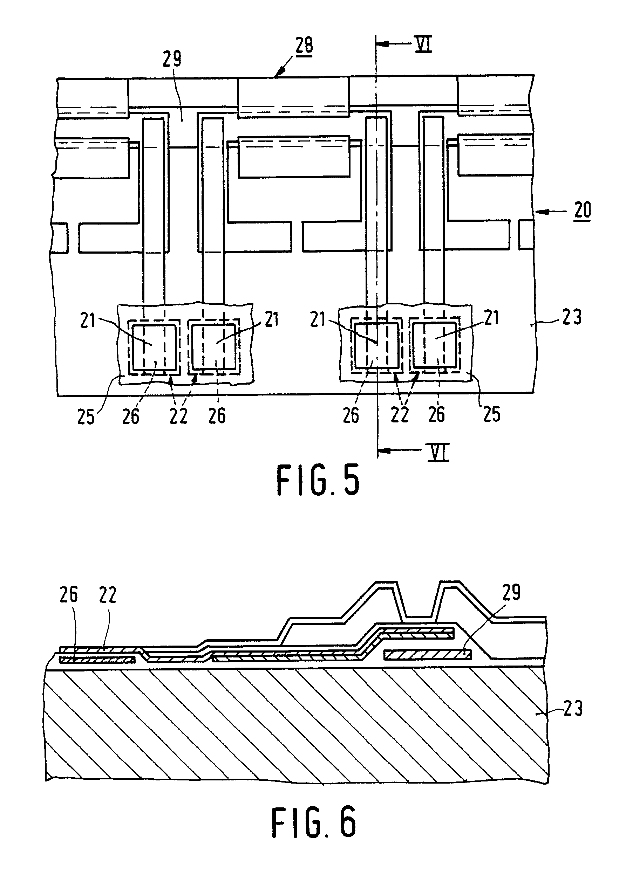

By placing a central portion 21 of the connecting tab 22, which has remained bare (see Figure 7) at an equal or a larger distance from the substrate 23 than the covering portions 24 of the shielding layer 25, a proper contact between the external connecting track 16 and the connecting tab 22 is obtained, also in case of a less well positioned foil 17 with respect to the magnetic head 20. Figures 5 and 6 show an embodiment of the thin-film magnetic head according to the invention, in this case a reading head 20, in which an auxiliary layer 26 is provided between the connecting tab 22 and the substrate 23 in the region of the uncovered portion 21 of the connecting tab (see also Figure 7). This auxiliary layer 26 constitutes a portion of a first layer of the magnetic head structure 28 of which the electrical conductor 29 also forms part. After structuring this layer the auxiliary layer 26 remains present on the substrate 23, together with the electrical conductor 29. This renders additional manufacturing steps for forming the auxiliary layer 26 superfluous.

Figure 7 shows that even if the foil 17 is positioned less accurately with respect to the connecting tab 22, the external connecting track 16 still makes contact via one plane with the uncoated portion 21 of the connecting tab 22.

It should be noted that the invention is not limited to the embodiment shown here. The structure of the raised connecting tab may also be used in other magnetic head construction, as, for example, in a writing head structure, instead of the reading head structure shown here. It is equally well possible to use the construction in a single-track magnetic head structure than in the multi-track magnetic structure shown here.

## Claims

1. A thin-film magnetic head, having a substrate on which at least a magnetic head structure consisting of several layers is present, the structure including at least one connecting tab for connecting a connecting track, the edges of the connecting tab being coated by covering portions of a shielding layer, characterized, in that a central portion of the connecting tab, located between the edges of the connecting tab, is located at at least the same distance from the substrate as the covering portions of the shielding layer.

2. A thin-film magnetic head as claimed in Claim 1, characterized in that in the region of the central portion of the connecting tab at least one auxiliary layer is provided between the substrate and the connecting tab. 3. A thin-film magnetic head as claimed in Claim 2, characterized in that the auxiliary layer forms part of at least one of the layers of the magnetic head structure.

FIG.1

FIG.2

FIG. 3

FIG.4

FIG. 7

FIG. 5

FIG. 6

European
Patent Office

EUROPEAN SEARCH
REPORT

Application Number

EP 91 20 1100

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 12, no. 345 (P-759)(3192) 16 September 1988, & JP-A-63 103411 (NEC CORP) 09 May 1988, * the whole document * | 1 | G 11 B 5/31 |
| A | PATENT ABSTRACTS OF JAPAN vol. 8, no. 23 (P-251)(1460) 31 January 1984, & JP-A-58 179922 (DENSHI KEISANKI KIHON GIJUTSU KENKIYUU KUMIAI) 21 October 1983, * the whole document * | 1,2 | |
| A | US-A-4 796 132   (DEKURA ET AL.) * column 1, lines 38 - 48 * * column 4, lines 33 - 49 * * column 6, lines 6 - 22; figure 6 * | 1 | |

TECHNICAL FIELDS
SEARCHED (Int. Cl.5)

G 11 B

The present search report has been drawn up for all claims

| Place of search | Date of completion of search | Examiner |
|---|---|---|
| The Hague | 26 August 91 | FUX J. |